# FASCICULE DE BREVET EUROPEEN

(11) **EP 3 967 598 B1**
(45) Date de publication et mention de la délivrance du brevet: **30.04.2025**
(21) Numéro de dépôt: 21193420.3
(22) Date de dépôt: 27.08.2021
(51) Int. Cl.: B64C 27/12, B64D 31/06, B64D 35/02, B64D 35/08, B64D 27/02, B64D 35/025

(54) **PROCÉDÉ ET DISPOSITIF DE GESTION DE L'ÉNERGIE FOURNIE PAR UNE INSTALLATION MOTRICE HYBRIDE POUR GIRAVION**
VERFAHREN UND VORRICHTUNG ZUR VERWALTUNG DER ENERGIE, DIE VON EINER HYBRID-TRIEBWERKSANLAGE FÜR DREHFLÜGELFLUGZEUGE GELIEFERT WIRD
METHOD AND DEVICE FOR MANAGING THE ENERGY OF A HYBRID DRIVE SYSTEM FOR A ROTORCRAFT

(30) Priorité: 14.09.2020 FR 2009286
(43) Date de publication de la demande: 16.03.2022
(73) Titulaire: Airbus Helicopters, 13725 Marignane Cedex (FR)
(72) Inventeur: GAZZINO, Marc, 13012 MARSEILLE (FR)
(74) Mandataire: GPI Brevets

(56) Documents cités:
- EP-A1- 2 327 625
- EP-A1- 2 684 798
- DE-A1- 102010 021 026
- US-A1- 2019 291 852
- US-A1- 2020 277 064

## Description

La présente invention se situe dans le domaine technique des installations motrices hybrides pour aéronef, et plus particulièrement des installations motrices hybrides pour giravion. L'invention concerne un procédé de gestion de l'énergie fournie par une installation motrice hybride pour la propulsion d'un giravion selon la revendication 1.

L'invention concerne également une installation motrice hybride pour la propulsion d'un giravion ainsi qu'un giravion comportant une telle d'une installation motrice hybride selon la revendication 14.

Un giravion est classiquement pourvu d'au moins un rotor principal pour assurer sa sustentation, voire sa propulsion.

Un giravion peut aussi comporter un rotor auxiliaire, par exemple un rotor arrière, pour notamment s'opposer au couple en lacet exercé par le rotor principal sur le fuselage du giravion et de contrôler des mouvements en lacet du giravion.

Un giravion peut également comporter une ou plusieurs hélices d'avancement destinées principalement à la propulsion du giravion. Cette ou ces hélices d'avancement peuvent également permettre de s'opposer au couple en lacet exercé par le rotor principal sur le fuselage du giravion et de contrôler ses mouvements en lacet.

Un giravion peut aussi comporter plusieurs rotors principaux, par exemple au moins trois rotors principaux, pour assurer sa sustentation, sa propulsion et sa manœuvrabilité. Un tel giravion peut être désigné par l'expression « giravion multirotor ».

Afin d'entraîner en rotation chaque rotor principal ainsi qu'éventuellement le rotor auxiliaire et/ou chaque hélice d'avancement, un giravion est muni d'une installation motrice comportant généralement un ou plusieurs moteurs thermiques ainsi qu'une boîte de transmission de puissance agencée entre le rotor principal et le ou les moteurs thermiques. On distingue notamment les giravions du type « monomoteur », dont l'installation motrice comporte un unique moteur thermique pour mettre en mouvement le rotor principal et le rotor arrière, et les giravions du type « bimoteur », dont l'installation motrice possède deux moteurs thermiques à cet effet.

Une installation motrice peut éventuellement comporter également un ou plusieurs moteurs électriques. Une installation motrice comportant un ou plusieurs moteurs thermiques et au moins un moteur électrique est généralement désignée « installation motrice hybride ». Une installation motrice hybride comporte également une ou plusieurs sources d'énergie électrique telles qu'une batterie, une super capacité ou une pile à combustible par exemple afin d'alimenter en énergie électrique chaque moteur électrique. Certaines sources d'énergie électrique sont des dispositifs de stockage d'énergie électrique rechargeables.

Un moteur électrique peut être implanté de différentes façons au sein d'une installation motrice hybride.

Par exemple, un moteur électrique peut être relié à un moteur thermique, en particulier à un générateur de gaz d'un turbomoteur. Ce moteur électrique entraîne alors en rotation l'arbre de rotation de ce générateur de gaz et, par suite, fournit également une puissance mécanique à la boîte de transmission de puissance. Une telle architecture d'une installation motrice hybride concerne en particulier un moteur électrique de faible puissance et peut être désignée par l'expression « micro-hybridation ».

Un moteur électrique peut également être implanté sur la chaîne de transmission de puissance de l'installation motrice hybride, relié par exemple à une entrée spécifique de la boîte de transmission de puissance ou encore relié à une sortie de la boîte de transmission de puissance, par exemple entre la boîte de transmission de puissance et un rotor du giravion, de préférence le rotor principal.

Une telle architecture d'installation motrice hybride dans laquelle au moins un moteur électrique est implanté sur la chaîne de transmission de puissance mécanique peut être désignée par l'expression « mild-hybridation ».

Un moteur électrique d'une installation motrice hybride peut être utilisé uniquement en mode moteur afin de transformer une énergie électrique en énergie mécanique pour entraîner en rotation un rotor principal. Un moteur électrique peut aussi être une machine électrique réversible combinant le mode moteur avec un mode générateur afin de transformer une énergie mécanique en énergie électrique pour recharger une source d'énergie électrique rechargeable ou pour fournir cette énergie électrique à un réseau électrique du giravion.

Une installation motrice hybride peut aussi comporter une génératrice électrique utilisée uniquement en mode générateur et destinée à transformer une énergie mécanique en énergie électrique.

Il est à noter que l'expression « moteur thermique » désigne par commodité dans l'ensemble du texte tout moteur thermique pouvant être utilisé dans une telle installation motrice pour giravion, par exemple des turbomoteurs ou encore des moteurs à pistons. L'expression « moteur thermique » est à opposer à l'expression « moteur électrique » qualifiant les moteurs mus par une énergie électrique.

Les moteurs thermiques et les moteurs électriques peuvent être utilisés indépendamment ou bien en combinaison, simultanément ou séquentiellement pour la propulsion du giravion.

Un moteur électrique peut par exemple intervenir en cas de panne d'un moteur thermique.

Le document FR 2997382 décrit notamment une installation motrice hybride d'un giravion munie de deux moteurs thermiques, d'une machine électrique, d'une boîte de transmission principale de puissance et d'un moyen de stockage d'énergie électrique. Suite à la détection d'une panne d'un moteur thermique, la machine électrique fournit si nécessaire une puissance auxiliaire afin de compenser la panne et permettre au pilote du giravion de manœuvrer en sécurité le giravion sans dégrader l'autre moteur thermique fonctionnel.

Les documents FR 2994687 et FR 3090576 décrivent quant à eux une installation motrice hybride d'un giravion munie d'un unique moteur thermique, d'un moteur électrique, d'une boîte de transmission principale de puissance et d'un moyen de stockage d'énergie électrique. Suite à une panne du moteur thermique, le moteur électrique fournit une puissance mécanique afin d'assister le pilote du giravion dans la réalisation d'une phase de vol en autorotation consécutive à la panne.

Un moteur électrique peut aussi être implanté pour limiter la puissance de chaque moteur thermique installé, comme décrit dans les documents FR 2933910 et FR 2952907, le moteur électrique étant utilisé en combinaison et simultanément avec au moins un moteur thermique.

Par exemple, selon le document FR 2933910, une installation motrice hybride comporte au moins un turbomoteur et au moins un moteur électrique mécaniquement liés à une boîte de transmission principale de puissance. Le moteur électrique est utilisé pour le démarrage d'un moteur thermique et lors d'une phase transitoire avec un besoin en énergie important. Le moteur électrique peut aussi être utilisé en mode générateur.

Selon le document FR 2952907, une installation motrice hybride comporte un unique moteur thermique, une boîte de transmission principale destinée à entraîner un rotor principal et une boîte de transmission arrière destinée à entraîner un rotor auxiliaire ainsi qu'un premier moteur électrique mécaniquement lié à la boîte de transmission principale et un deuxième moteur électrique mécaniquement lié à la boîte de transmission arrière.

Le document US 2019/0291852 décrit un aéronef multirotor dont chaque rotor est entraîné par une motorisation hybride comportant au moins un moteur thermique et au moins un moteur électrique. Un système d'embrayage, par exemple une roue libre, permet de relier chaque moteur au rotor. Des capteurs reliés aux moteurs électriques et/ou aux rotors mesurent au moins un paramètre de fonctionnement de ces moteurs électriques. Un processeur embarqué permet de contrôler chaque moteur thermique et électrique ainsi qu'éventuellement le système d'embrayage pour que chaque moteur thermique et/ou électrique fournisse une puissance prédéterminée en fonction d'une caractéristique de vol prédéfinie. Par exemple, les moteurs thermiques et électriques fournissent leurs puissances maximales pour le décollage de l'aéronef, puis seuls les moteurs électriques sont utilisés en vol de croisière, à partir d'une altitude prédéterminée. En cas de faible énergie électrique dans les batteries, les moteurs thermiques sont utilisés pour assurer le vol et recharger les batteries.

Le document EP 2327625 décrit une installation motrice hybride pour aéronef à voilure tournante comportant un unique moteur thermique et deux moteurs électriques ainsi qu'au moins une batterie électrique. Un premier moteur électrique est relié à une boîte de transmission principale et un second moteur électrique est relié à une boîte de transmission arrière. En fonctionnement normal, le moteur thermique entraîne seul la boîte de transmission principale et la boîte de transmission arrière. Les moteurs électriques interviennent en cas d'incident ou de panne du moteur thermique afin d'entraîner respectivement un rotor principal et un rotor arrière de l'aéronef pour permettre un vol de l'aéronef jusqu'à un point d'atterrissage. L'installation motrice peut comporter un organe de régulation contrôlant les moteurs électriques selon des lois prédéterminées. De plus, en cas de survitesse du moteur thermique, les moteurs électriques fonctionnent en mode générateur afin de réduire la vitesse de rotation du moteur thermique.

Le document EP 2684798 décrit une architecture électrique pour un aéronef muni d'une installation motrice hybride permettant la gestion de l'énergie électrique à bord de l'aéronef, l'installation motrice hybride comportant au moins un moteur thermique et au moins un moteur électrique réversible ainsi qu'au moins une réserve d'énergie électrique et éventuellement un générateur de courant électrique. L'architecture électrique comporte un calculateur permettant de réguler les alimentations en énergie électrique provenant d'une réserve d'énergie électrique ou bien d'un moteur électrique en fonction d'informations de fonctionnement du moteur thermique, du moteur électrique et de la réserve d'énergie électrique. Le calculateur régule par exemple le fonctionnement d'un moteur électrique pour démarrer un moteur thermique.

Le document US 2020/0277064 décrit un module de commande connecté à une installation motrice hybride ayant un moteur thermique et un moteur électrique afin de contrôler des couples de sortie du moteur thermique et du moteur électrique. Le module de commande peut être configuré pour déterminer si au moins un moteur électrique ou un moteur thermique est dans un mode normal de sorte que le moteur électrique et/ou le moteur thermique puisse fournir un couple. Le module de commande peut déterminer et appliquer une répartition de couples entre le moteur électrique et le moteur thermique en fonction de différents paramètres, mesurés ou non, notamment relatifs à la batterie pour atteindre une valeur de couple total.

Le document DE 10 2010 021026 décrit un système de propulsion hybride pour aéronef, en particulier à voilure tournante, comportant un module de génération d'énergie électrique muni d'un moteur thermique et d'un générateur, et un ou plusieurs moteurs électriques pour entraîner un ou plusieurs rotors de l'aéronef. Des capteurs sont positionnés sur les organes de commande de l'aéronef pour mesurer leurs mouvements, en déduire les intentions du pilote de l'aéronef, et en déduire la poussée nécessaire pour chaque rotor de l'aéronef.

Par ailleurs, l'arrière plan technologique comporte les documents EP 2692634 et EP 2778048 décrivant des systèmes permettant de stocker de l'énergie lors d'un fonctionnement normal d'un giravion et de restituer cette énergie pour entraîner le rotor principal du giravion en cas de panne moteur ou bien lors de phases de vol critiques. L'énergie peut être stockée sous forme électrique, hydraulique ou bien mécanique.

L'utilisation d'un moteur électrique peut ainsi permettre de pallier une panne d'un moteur thermique, de compenser un besoin en énergie transitoire pour l'entraînement d'un rotor principal ainsi qu'éventuellement d'un rotor auxiliaire et/ou d'hélices d'avancement.

Toutefois, chaque moteur électrique est utilisé principalement en fonction des besoins du giravion et/ou de l'installation motrice hybride sans prendre en compte ni optimiser l'énergie électrique disponible et/ou l'état de chaque source d'énergie électrique.

La présente invention a alors pour objet de proposer un procédé et un dispositif de gestion de l'énergie fournie par une installation motrice hybride pour la propulsion d'un giravion permettant de s'affranchir des limitations mentionnées ci-dessus, en proposant une solution alternative au fonctionnement de l'installation motrice hybride et en particulier de chaque moteur thermique et électrique par une supervision des différentes sources d'énergie électrique utilisées.

La présente invention concerne tout d'abord un procédé de gestion de l'énergie fournie par une installation motrice hybride pour la propulsion d'un giravion, le giravion comportant :
- une installation motrice hybride munie d'au moins un moteur thermique, d'au moins un moteur électrique, d'une boîte de transmission principale de puissance, d'au moins une source d'énergie électrique, d'un boîtier de contrôle par moteur thermique, d'un dispositif de commande par moteur électrique et d'au moins un capteur destiné à surveiller ladite au moins une source d'énergie électrique ou ledit au moins un moteur électrique,
- au moins un rotor principal entraîné en rotation par l'installation motrice hybride et
- au moins un calculateur.

Le procédé selon l'invention est remarquable en ce qu'il comporte les étapes suivantes :
- acquisition d'au moins une première caractéristique de ladite au moins une source d'énergie électrique et/ou dudit au moins un moteur électrique par l'intermédiaire dudit au moins un capteur,
- détermination d'un besoin en puissance mécanique du giravion,
- détermination d'une première répartition de puissance entre d'une part ledit au moins un moteur thermique et d'autre part ledit au moins un moteur électrique en fonction de ladite au moins une première caractéristique et du besoin en puissance mécanique du giravion, et
- commande dudit au moins un moteur thermique et dudit au moins un moteur électrique par l'intermédiaire respectivement dudit au moins un boîtier de contrôle et dudit au moins un dispositif de commande selon un mode de fonctionnement réparti, le mode de fonctionnement réparti appliquant la première répartition de puissance.

De la sorte, le procédé de gestion de l'énergie fournie par une installation motrice hybride pour la propulsion d'un giravion selon l'invention permet le pilotage de l'installation motrice hybride et en particulier de chaque moteur thermique et de chaque moteur électrique en fonction de l'état de chaque source d'énergie électrique. Le calculateur reçoit ainsi des informations d'état de chacune des sources d'énergie électrique et envoie des consignes d'utilisation aux moteurs thermique(s) et électrique(s) afin d'optimiser le fonctionnement de l'installation motrice hybride selon la première répartition de puissance mécanique fournie par chaque moteur thermique et par chaque moteur électrique.

L'installation motrice hybride peut comporter un unique moteur thermique ou plusieurs moteurs thermiques, typiquement deux moteurs thermiques. La boîte de transmission de puissance est agencée entre le rotor principal et chaque moteur thermique.

Chaque boîtier de contrôle permet de commander et de surveiller un moteur thermique. Chaque boîtier de contrôle peut ainsi mesurer ou estimer des paramètres de fonctionnement du moteur thermique. Un boîtier de contrôle est par exemple un calculateur moteur de type EECU pour la désignation en langue anglaise « Electronic Engine Control Unit » ou de type FADEC pour la désignation en langue anglaise « Full Authority Digital Engine Control ».

Chaque dispositif de commande peut également permettre de commander et de surveiller un moteur électrique.

Le calculateur peut être dédié uniquement à la réalisation du procédé de gestion de l'énergie selon l'invention. Le calculateur peut être hébergé par un boîtier de contrôle ou un dispositif de commande par exemple. Le calculateur peut aussi être partagé avec d'autres fonctions du giravion et être intégré par exemple à un système avionique du giravion.

L'installation motrice hybride peut comporter un ou plusieurs moteurs électriques ainsi qu'une ou plusieurs sources d'énergie électrique, par exemple une batterie, une super capacité ou une pile à combustible, afin d'alimenter en énergie électrique chaque moteur électrique. Une source d'énergie électrique peut être un dispositif de stockage d'énergie électrique rechargeable.

Un moteur électrique peut être relié directement à un moteur thermique, en particulier à un générateur de gaz d'un turbomoteur ou bien être implanté entre un moteur thermique et la boîte de transmission principale de puissance ou encore à une entrée spécifique de la boîte de transmission de puissance.

Un moteur électrique de l'installation motrice hybride peut être utilisé uniquement en mode moteur afin de transformer une énergie électrique en énergie mécanique pour entraîner en rotation le rotor principal. Un moteur électrique peut combiner le mode moteur avec un mode générateur afin de transformer une énergie mécanique en énergie électrique pour recharger une source d'énergie électrique rechargeable ou pour fournir cette énergie électrique à un réseau électrique du giravion. L'installation motrice hybride peut aussi comporter une génératrice électrique utilisée uniquement en mode générateur.

Lors de l'étape d'acquisition d'au moins une première caractéristique de ladite au moins une source d'énergie électrique et/ou dudit au moins un moteur électrique par l'intermédiaire d'au moins un capteur, ladite au moins une première caractéristique peut être choisie parmi la liste suivante :
- un état de charge de ladite au moins une source d'énergie électrique,
- un taux de décharge de ladite au moins une source d'énergie électrique,
- une température de ladite au moins une source d'énergie électrique,
- un état de santé de ladite au moins une source d'énergie électrique,
- une température dudit au moins un moteur électrique.

Chaque capteur permettant l'acquisition d'une première caractéristique est intégré à l'installation motrice hybride. Pour une première caractéristique d'une source d'énergie électrique, le capteur peut être intégré à la source d'énergie électrique. Pour une première caractéristique d'un moteur électrique, le capteur peut être intégré au dispositif de commande de ce moteur électrique ou au moteur électrique en fonction par exemple de la première caractéristique qu'il mesure.

L'étape de détermination d'un besoin en puissance mécanique du giravion peut être réalisée de façon usuelle, par exemple en fonction de la masse du giravion, de sa vitesse d'avancement, de sa vitesse verticale et des valeurs des commande de pas collectif et de pas cyclique des pales du rotor principal.

Le giravion peut comporter un dispositif dédié à la détermination de ce besoin en puissance mécanique du giravion. Un système avionique équipant le giravion peut également déterminer ce besoin en puissance mécanique en fonction d'informations fournies par divers capteurs du giravion. Le calculateur peut également déterminer ce besoin en puissance mécanique à l'aide de telles informations.

Dans ce but, le procédé selon l'invention peut comporter une étape d'acquisition d'au moins une seconde caractéristique du giravion et/ou de l'installation motrice hybride, ladite au moins une seconde caractéristique pouvant être une information utilisée lors de l'étape de détermination d'un besoin en puissance mécanique du giravion. Cette étape d'acquisition d'au moins une seconde caractéristique peut être réalisée par l'intermédiaire par exemple d'au moins un capteur spécifique présent dans le giravion.

Une seconde caractéristique peut être choisie parmi la liste suivante :
- vitesse de rotation d'un moteur thermique,
- température d'un moteur thermique,
- état de santé d'un moteur thermique,
- vitesse de rotation du rotor principal,
- altitude du giravion,
- vitesse d'avancement du giravion,
- vitesse verticale du giravion,
- valeur de la commande de pas collectif des pales du rotor principal, et
- valeur de la commande de pas cyclique des pales du rotor principal.

Ensuite, l'étape de détermination d'une première répartition de puissance entre d'une part ledit au moins un moteur thermique et d'autre part ledit au moins un moteur électrique peut être réalisée par l'intermédiaire du calculateur, en fonction de ladite au moins une première caractéristique et du besoin en puissance mécanique du giravion.

La première répartition de puissance est déterminée en prenant notamment en compte la quantité d'énergie électrique que peut fournir chaque source d'énergie électrique, par exemple la quantité d'énergie électrique disponible dans une batterie ou la quantité d'énergie électrique que peut générer une pile à combustible. La première répartition de puissance est aussi déterminée en prenant notamment en compte les conditions de fonctionnement de chaque source d'énergie électrique, notamment sa température et son état de santé ainsi que son état de charge. L'état de santé d'une batterie correspond par exemple à son vieillissement. L'état de charge d'une batterie correspond par exemple à la quantité d'énergie disponible dans la batterie.

La première répartition de puissance peut également être déterminée en fonction de la puissance mécanique que peut réellement fournir chaque moteur électrique, en prenant notamment en compte la température de chaque moteur électrique et la quantité d'énergie électrique disponible dans chaque source, le niveau de puissance fourni par le moteur électrique pouvant être modifiés en fonction de cette température.

De la sorte, le procédé selon l'invention permet de déterminer la puissance mécanique fournie par chaque moteur thermique et la puissance mécanique fournie par chaque moteur électrique afin d'assurer la propulsion du giravion en optimisant l'utilisation de chaque source d'énergie électrique.

Chaque moteur électrique apporte ainsi une puissance mécanique supplémentaire à la boîte de transmission principale de puissance, en complément de la puissance fournie par chaque moteur thermique afin d'entraîner en rotation au moins un arbre de sortie de la boîte de transmission principale de puissance de l'installation motrice hybride, améliorant ainsi les performances de l'installation motrice hybride.

Selon la première répartition de puissance, l'utilisation de l'énergie mécanique de chaque moteur électrique s'ajoutant à l'énergie mécanique de chaque moteur thermique peut permettre notamment d'optimiser la consommation globale de carburant de chaque moteur thermique et/ou d'augmenter les performances du giravion, par exemple sa masse maximale au décollage.

Ensuite, l'étape de commande dudit au moins un moteur thermique et dudit au moins un moteur électrique est réalisée par l'intermédiaire respectivement dudit au moins un boîtier de contrôle et dudit au moins un dispositif de commande selon un mode de fonctionnement réparti afin de propulser le giravion, le mode de fonctionnement réparti appliquant ladite première répartition de puissance.

En appliquant la première répartition de l'énergie mécanique fournie par chaque moteur thermique et par chaque moteur électrique, le procédé selon l'invention permet avantageusement de réaliser une supervision des différentes sources d'énergie électrique et de leur utilisation pendant le vol du giravion pour assurer la propulsion du giravion.

Le procédé selon l'invention peut de plus comprendre une ou plusieurs des caractéristiques qui suivent, prises seules ou en combinaison.

Le procédé selon l'invention comporte différents modes de fonctionnement de l'installation motrice hybride assurant la gestion des énergies pour optimiser l'utilisation des différentes sources d'énergie en fonction par exemple des conditions de vol ou de la mission à réaliser.

Dans ce but, le procédé comporte les étapes suivantes :
- sélection d'un mode de fonctionnement pour sélectionner un mode de fonctionnement de l'installation motrice hybride par l'intermédiaire d'un dispositif de sélection,
- commande dudit au moins un moteur thermique et dudit au moins un moteur électrique par l'intermédiaire respectivement dudit au moins un boîtier de contrôle et dudit au moins un dispositif de commande selon le mode de fonctionnement sélectionné parmi les modes de fonctionnement suivants en fonction de la sélection :
   - le mode de fonctionnement réparti précédemment décrit,
   - un mode de fonctionnement total au cours duquel la puissance fournie par l'installation motrice hybride est augmentée, chaque moteur thermique fournissant la puissance maximale disponible et chaque moteur électrique fournissant la puissance maximale disponible dans les limites de la capacité du giravion,
   - un mode de fonctionnement « basse émission » appliquant une seconde répartition de puissance entre d'une part ledit au moins un moteur thermique et d'autre part ledit au moins un moteur électrique, la seconde répartition de puissance limitant les émissions polluantes de l'installation motrice hybride pour l'environnement extérieur au giravion.

Le dispositif de sélection peut être un sélecteur manuel à plusieurs positions, telle une molette rotative munie de plusieurs positions ou bien comporter un écran et une dalle tactile par exemple...

Le mode de fonctionnement total permet de fournir la puissance maximale disponible pour la réalisation par exemple d'une manœuvre exigeante, le transport d'une charge utile lourde, d'une augmentation de l'altitude maximale de vol du giravion ...

La seconde répartition de puissance peut être prédéterminée. Par exemple, selon la seconde répartition de puissance, ledit au moins un moteur électrique fournit la puissance et l'énergie maximales disponibles et ledit au moins un moteur thermique fournit un complément de puissance en fonction du besoin en puissance mécanique du giravion.

La seconde répartition de puissance peut aussi être calculée en temps réel par le calculateur en fonction d'au moins une première caractéristique et du besoin en puissance, voire éventuellement d'au moins une seconde caractéristique. La seconde répartition de puissance tient compte de l'état des sources d'énergie électrique, en fonction des puissances et constantes de temps d'utilisation ou quantités d'énergie disponibles pour chaque moteur thermique, chaque moteur électrique et chaque source d'énergie électrique.

Dans ce cas, le procédé selon l'invention peut comporter une étape de détermination d'une seconde répartition de puissance entre d'une part ledit au moins un moteur thermique et d'autre part ledit au moins un moteur électrique en fonction de ladite au moins une première caractéristique et du besoin en puissance mécanique du giravion, et éventuellement d'au moins une seconde caractéristique.

La seconde répartition de puissance peut avantageusement permettre de gérer des appels de puissance de l'installation motrice hybride en utilisant au moins un moteur électrique afin de limiter les sollicitations de chaque moteur thermique et donc d'émissions polluantes. Les appels de puissance de l'installation motrice hybride peuvent être différents selon les phases de vol et correspondent par exemple aux phases de décollage, d'atterrissage, d'augmentation d'altitude et de manœuvre.

La seconde répartition de puissance peut permettre une utilisation optimale de l'énergie électrique stockée et/ou fournie par chaque source d'énergie électrique pour limiter l'utilisation de chaque moteur thermique. La seconde répartition de puissance peut permettre ainsi un filtrage des pics de puissance de chaque moteur thermique afin de réduire sa consommation de carburant et d'améliorer sa durée de vie.

Selon un autre exemple, l'étape de détermination d'une première répartition de puissance utilise au moins une seconde caractéristique afin de déterminer cette première répartition de puissance. De la sorte, la première répartition de puissance prend en compte les conditions de fonctionnement du giravion et de l'installation motrice afin d'optimiser cette répartition de puissance entre chaque moteur thermique et chaque moteur électrique.

Selon un autre exemple, le procédé selon l'invention peut comporter une étape de détermination d'une phase de vol du giravion. La phase de vol ainsi déterminée peut être prise en compte lors de l'étape de détermination de la première répartition de puissance ainsi que dans la seconde répartition de puissance.

La phase de vol peut être déterminée par exemple en fonction d'une ou de plusieurs secondes caractéristiques du giravion et/ou de l'installation motrice hybride. La connaissance de la phase de vol permet d'optimiser la première répartition de puissance et/ou la seconde répartition de puissance.

Selon un autre exemple, indépendamment du mode de fonctionnement sélectionné, la première répartition de puissance ou la seconde répartition est déterminée de sorte qu'au moins un moteur électrique fonctionne en mode générateur d'énergie électrique de sorte à recharger au moins une source quand cela est possible en fonction du besoin en puissance du giravion.

Selon un autre exemple, l'étape de détermination d'une première répartition de puissance peut prendre en compte la préservation d'une réserve de sécurité d'énergie électrique pour au moins une source d'énergie électrique. Dans ce cas, au moins une source d'énergie électrique est disponible pour fournir, à tout moment du vol, une énergie électrique en cas d'urgence, par exemple en cas de panne d'un moteur thermique ou de besoin d'une puissance importante pour une manœuvre exigeante ou d'urgence. Cette réserve de sécurité garantit ainsi une marge de sécurité dans l'utilisation du giravion, par exemple pour franchir une montagne, survoler une zone hostile... Dans ce cas, une priorité est donnée à la disponibilité d'une énergie électrique de réserve. Cette réserve de sécurité est ainsi utilisée pour alimenter au moins un moteur électrique pour aider la fin de vol en palier et l'atterrissage avec une durée d'utilisation limitée.

La préservation d'une réserve de sécurité d'énergie électrique pour au moins une source d'énergie électrique peut aussi être prise en compte pour le mode de fonctionnement total et/ou pour le mode de fonctionnement « basse émission ».

Selon un autre exemple, l'étape de détermination d'une première répartition de puissance prend en compte le plan de vol du giravion de sorte que chaque source d'énergie électrique ne comporte plus d'énergie électrique à la fin du vol. De la sorte, l'utilisation de chaque source est optimisée en fonction du plan de vol. Ainsi, si une réserve de sécurité a été préservée au cours de la phase de vol, cette réserve de sécurité peut être utilisée lors de la phase d'atterrissage exécutée à la fin du plan de vol.

La présente invention vise aussi une installation motrice hybride pour giravion, l'installation motrice hybride appliquant le procédé tel que précédemment décrit.

L'installation motrice hybride comporte au moins un moteur thermique, au moins un moteur électrique, une boîte de transmission principale de puissance, au moins une source d'énergie électrique, un boîtier de contrôle par moteur thermique, un dispositif de commande par moteur électrique et au moins un capteur destiné à surveiller ladite au moins une source d'énergie électrique ou ledit au moins un moteur électrique.

L'installation motrice hybride peut comporter un calculateur configuré pour mettre en œuvre le procédé tel que précédemment décrit. L'installation motrice hybride peut aussi comporter un dispositif de gestion de l'énergie fournie à l'installation motrice hybride pour la propulsion du giravion, le dispositif de gestion de l'énergie étant muni d'au moins un calculateur et configuré pour mettre en œuvre le procédé tel que précédemment décrit.

La présente invention vise enfin un giravion comportant une installation motrice hybride telle que précédemment décrite et au moins un rotor principal entraîné en rotation par l'installation motrice hybride.

L'invention et ses avantages apparaîtront avec plus de détails dans le cadre de la description qui suit avec des exemples donnés à titre illustratif en référence aux figures annexées qui représentent :
- la figure 1, une vue d'un giravion selon l'invention,
- la figure 2, un schéma synoptique d'un procédé selon l'invention, et
- la figure 3, un schéma synoptique d'un procédé selon l'invention.

Les éléments présents dans plusieurs figures distinctes sont affectés d'une seule et même référence.

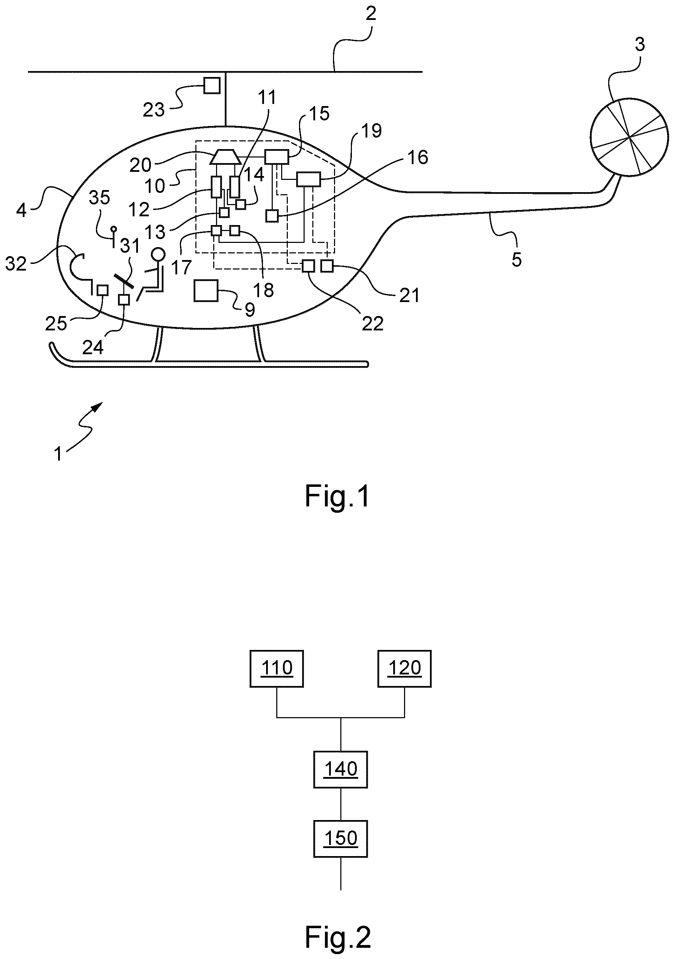

[Fig 1] La figure 1 représente un giravion 1 comportant un fuselage 4, un rotor principal 2 de sustentation et un rotor auxiliaire 3 agencé au niveau d'une extrémité libre d'une poutre de queue 5. Le rotor principal 2 et le rotor auxiliaire 3 comportent respectivement un moyeu tournant et des pales. Le giravion 1 comporte également une installation motrice hybride 10 entraînant en rotation le rotor principal 2 de sustentation et le rotor auxiliaire 3.

L'installation motrice hybride 10 peut comporter au moins un moteur thermique 11,12, au moins un moteur électrique 15,17, une boîte de transmission principale de puissance 20, au moins une source 19 d'énergie électrique, un boîtier de contrôle 13,14 par moteur thermique 11,12, un dispositif de commande 16,18 par moteur électrique 15,17 et au moins un capteur 21,22 destiné à surveiller chaque source 19 d'énergie électrique ou chaque moteur électrique 15,17.

Selon la figure 1, l'installation motrice hybride 10 comporte deux moteurs thermiques 11,12, deux moteurs électriques 15,17, une boîte de transmission principale de puissance 20, une source 19 d'énergie électrique, un boîtier de contrôle 13,14 par moteur thermique 11,12, un dispositif de commande 16,18 par moteur électrique 15,17 ainsi qu'un capteur 21 destiné à surveiller la source 19 d'énergie électrique et un capteur 22 destiné à surveiller les moteurs électriques 15,17.

Les deux moteurs thermiques 11,12 sont reliés à la boîte de transmission principale de puissance 20. Chaque moteur thermique 11,12 peut par exemple avoir une puissance nominale de l'ordre de 400 à 600 kilowatts (400 à 600 kW). Ces moteurs thermiques 11,12 peuvent par exemple être des turbomoteurs ou bien des moteurs à pistons.

Un premier moteur électrique 15 est également relié à la boîte de transmission principale de puissance 20. Ce premier moteur électrique 15 peut par exemple avoir une puissance nominale de l'ordre de 100 à 300 kW. Ce premier moteur électrique 15 constitue une source de puissance transitoire de l'installation motrice hybride 10 et présente des durées d'utilisation en mode moteur de quelques dizaines de secondes à quelques minutes par exemple.

Un second moteur électrique 17 est relié directement à un des moteurs thermiques 11,12. Ce second moteur électrique 17 peut par exemple avoir une puissance nominale de l'ordre de 10 à 20 kW. Ce second moteur électrique 17 présente quant à lui des durées de fonctionnement courtes, de l'ordre de quelques secondes. Ce second moteur électrique 17 peut notamment servir à démarrer le moteur thermique 11,12 auquel il est relié et à lui apporter un petit surplus de puissance de façon transitoire.

Le giravion 1 comporte également des moyens de commande 31,32 et un dispositif de sélection 35. Un manche de commande 31 est destiné à modifier collectivement le pas des pales du rotor principal 2 alors qu'un levier de commande 32 est destiné à modifier cycliquement le pas des pales du rotor principal 2. Le giravion 1 comporte aussi un capteur 23 mesurant la vitesse de rotation du rotor principal 2 et deux capteurs 24,25 mesurant respectivement le débattement du manche de commande 31 et du levier de commande 32.

L'installation motrice hybride 10 comporte également un calculateur 9 configuré pour mettre en oeuvre un procédé de gestion de l'énergie fournie par l'installation motrice hybride 10 pour la propulsion du giravion 1. Le calculateur 9 peut comprendre par exemple au moins un processeur et au moins une mémoire, au moins un circuit intégré, au moins un système programmable, au moins un circuit logique, ces exemples ne limitant pas la portée donnée à l'expression calculateur. Le terme processeur peut désigner aussi bien une unité centrale de traitement connue sous l'acronyme CPU, une unité graphique de traitement GPU, une unité digitale connue sous l'acronyme DSP, un microcontrôleur...

Le calculateur 9 est ainsi relié par voie filaire ou non filaire aux capteurs 21,22, aux boîtiers de contrôle 13,14 et aux dispositifs de commande 16,18 ainsi qu'éventuellement aux capteurs 23,24,25.

Le calculateur 9 peut aussi être hébergée par un boîtier de contrôle 13,14, un dispositif de commande 16,18 ou encore être partagé avec d'autres fonctions du giravion 1 et être intégré par exemple à un système avionique du giravion 1.

[Fig 2] La figure 2 représente un schéma synoptique de ce procédé de gestion de l'énergie. Ce procédé peut comporter quatre étapes principales.

Tout d'abord, une étape d'acquisition 110 d'au moins une première caractéristique de la source 19 d'énergie électrique et/ou de chaque moteur électrique 15,17 est réalisée par l'intermédiaire des capteurs 21,22.

Une première caractéristique de la source 19 d'énergie électrique peut être un état de charge de la source 19 d'énergie électrique, un taux de décharge de la source d'énergie électrique, une température de la source 19 d'énergie électrique et un état de santé de la source 19 d'énergie électrique. Une première caractéristique des moteurs électriques 15,17 peut être une température d'un moteur électrique 15,17.

Les premières caractéristiques de la source 19 acquises lors de cette étape d'acquisition 110 peuvent permettre de définir l'état courant de la source 19 d'énergie électrique, et d'en déduire la capacité de la source 19 à fournir de l'énergie électrique et la quantité d'énergie électrique que la source 19 peut fournir. Les premières caractéristiques de la source 19 acquises lors de cette étape d'acquisition 110 peuvent aussi permettre de définir la quantité d'énergie électrique que peut utiliser chaque moteur électrique 15,17 et d'en déduire la puissance mécanique que peut délivrer chaque moteur thermique 15,17.

Une étape de détermination 120 d'un besoin en puissance mécanique du giravion 1 est réalisée de façon usuelle, par exemple en fonction de la masse du giravion 1, de sa vitesse d'avancement, de sa vitesse verticale et des valeurs des commande de pas collectif et de pas cyclique des pales du rotor principal 2.

L'étape de détermination 120 d'un besoin en puissance mécanique du giravion 1 est réalisée par exemple par l'intermédiaire du calculateur 9 à l'aide de telles informations. L'étape de détermination 120 d'un besoin en puissance mécanique du giravion 1 peut aussi être réalisée par un système avionique du giravion 1 ou un dispositif dédié.

L'étape d'acquisition 110 et l'étape de détermination 120 sont de préférence réalisées en parallèle. Cependant, l'étape d'acquisition 110 et l'étape de détermination 120 peuvent être réalisées de façon séquentielle.

Ensuite, une étape de détermination 140 d'une première répartition de puissance entre d'une part les moteurs thermiques 11,12 et d'autre part les moteurs électriques 15,17 en fonction d'au moins une première caractéristique et du besoin en puissance mécanique du giravion 1 par l'intermédiaire du calculateur 9.

Lors de cette étape de détermination 140 de la première répartition de puissance, la première répartition de puissance est déterminée à partir de la quantité d'énergie électrique que peut fournir la source 19 d'énergie électrique et des conditions de fonctionnement de la source 19 d'énergie électrique, par exemple sa température, son état de santé et son taux de décharge. La première répartition de puissance est déterminée en fonction de la puissance mécanique que peut réellement fournir chaque moteur électrique 15,17, en prenant notamment en compte la température de chaque moteur électrique 15,17 et la quantité d'énergie électrique disponible dans la source 19 d'énergie électrique.

Enfin, le procédé comporte une étape de commande 150 du au moins un moteur thermique 11,12 et du au moins un moteur électrique 15,17 réalisée par l'intermédiaire respectivement de chaque boîtier de contrôle 13,14 et de chaque dispositif de commande 16,18 selon un mode de fonctionnement réparti 160, le mode de fonctionnement réparti 160 appliquant la première répartition de puissance.

Ensuite, l'étape de commande 150 des deux moteurs thermiques 11,12 et des deux moteurs électriques 15,17 est réalisée par l'intermédiaire respectivement des deux boîtiers de contrôle 13,14 et des deux dispositifs de commande 16,18 selon un mode de fonctionnement réparti afin de propulser le giravion 1 en optimisant l'utilisation des énergies disponibles dans le giravion 1. Le mode de fonctionnement réparti applique la première répartition de puissance précédemment déterminée.

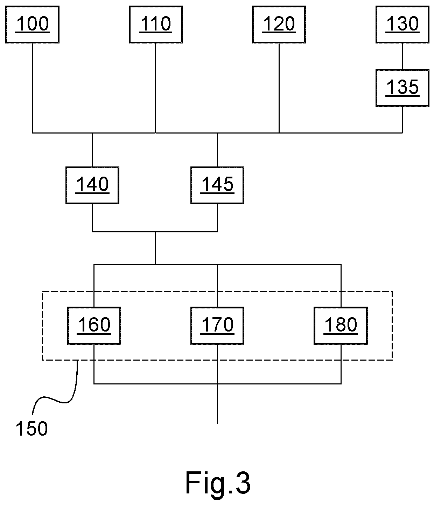

[Fig 3] Le procédé de gestion de l'énergie fournie par une installation motrice hybride 10 pour la propulsion d'un giravion 1 selon l'invention peut comporter des étapes complémentaires aux quatre étapes principales décrites à la figure 2. La figure 3 représente un schéma synoptique d'un tel procédé de gestion de l'énergie.

Le procédé selon l'invention peut par exemple comporter une étape d'acquisition 130 d'au moins une seconde caractéristique du giravion 1 et/ou de l'installation motrice hybride 10. Cette étape d'acquisition 130 d'au moins une seconde caractéristique est par exemple réalisée grâce au capteur 23 mesurant la vitesse de rotation du rotor principal 2 et/ou aux capteurs 24,25 mesurant respectivement le débattement du manche de commande 31 et du levier de commande 32. D'autres capteurs présents dans le giravion 1 peuvent également être utilisés.

Une seconde caractéristique de l'installation motrice hybride 10 peut être la vitesse de rotation d'un moteur thermique 11,12, sa température, son état de santé. Une seconde caractéristique du giravion 1 peut être la vitesse de rotation du rotor principal 2, l'altitude du giravion 1, sa vitesse d'avancement et sa vitesse verticale ou encore la valeur d'une commande de pas collectif et/ou de pas cyclique des pales du rotor principal 2.

Une ou plusieurs secondes caractéristiques peuvent être utilisées aussi bien lors de l'étape de détermination 140 d'une première répartition de puissance que lors de l'étape de détermination 120 d'un besoin en puissance mécanique du giravion 1.

Le procédé selon l'invention peut également comporter une étape de détermination 135 d'une phase de vol du giravion 1. La phase de vol peut être déterminée classiquement à partir des conditions de vol du giravion 1. Cette étape de détermination 135 d'une phase de vol du giravion 1 peut notamment être réalisée grâce aux secondes caractéristiques du giravion 1 et par l'intermédiaire du calculateur 9. Une phase de vol est par exemple une phase de décollage, d'atterrissage, de vol stationnaire, de vol en palier, de changement d'altitude et ou encore de manoeuvre.

La première répartition de puissance peut ainsi être déterminée en fonction d'une ou plusieurs secondes caractéristiques et/ou de la phase de vol courante du giravion 1. De la sorte, la première répartition de puissance peut être déterminée en tenant compte des conditions de fonctionnement du giravion 1 et de l'installation motrice hybride 10. La première répartition de puissance peut ainsi permettre d'optimiser le fonctionnement de chaque moteur thermique 11,12 en fonction de ces conditions, les moteurs électriques 15,17 fournissant alors le complément de puissance mécanique nécessaire au vol du giravion 1.

De la sorte, la première répartition de puissance, peut permettre d'optimiser la consommation globale de carburant de chaque moteur thermique 11,12 et/ou limiter leur vieillissement.

La première répartition de puissance peut aussi être prédéterminée, tant que les conditions de fonctionnement des moteurs thermiques 11,12 et des moteurs électriques 15,17 ainsi que de la source 19 le permettent. Par exemple, le besoin en puissance mécanique du giravion 1 est reparti selon un pourcentage prédéterminé entre les moteurs thermiques 11,12 et les moteurs électriques 15,17, tant que ce pourcentage prédéterminé ne met pas en danger le fonctionnement des moteurs thermiques 11,12 et des moteurs électriques 15,17 et tant que la capacité de la source 19 le permet. Lorsque ce pourcentage prédéterminé ne peut plus être respecté, le calculateur 9 modifie la première répartition en fonction d'une ou plusieurs premières caractéristiques et du besoin en puissance mécanique ainsi qu'éventuellement en fonction d'une ou plusieurs secondes caractéristiques.

Par exemple, selon le pourcentage prédéterminé, le besoin en puissance mécanique du giravion est reparti de sorte que les moteurs thermiques 11,12 fournissent 80% de ce besoin en puissance mécanique et les moteurs électriques 15,17 fournissent 20% de ce besoin en puissance mécanique. Bien entendu, d'autres pourcentages de répartition de cette puissance peuvent être utilisés.

De plus, l'étape de détermination 140 d'une première répartition de puissance peut prendre en compte la préservation d'une réserve de sécurité d'énergie électrique pour la source 19 d'énergie électrique. Ainsi, toute l'énergie électrique contenue dans la source 19 n'est pas prise en compte pour la détermination de la première répartition. Une partie de cette énergie électrique est préservée pour être utilisée en cas de panne d'un moteur thermique 11,12 afin que le moteur électrique 15 pallie au moins partiellement cette panne.

L'étape de détermination 140 d'une première répartition de puissance peut également tenir compte du plan de vol du giravion 1 afin que la quantité totale d'énergie contenue dans la source 19 d'énergie électrique soit consommée sur ce plan de vol et que la source 19 ne comporte plus d'énergie électrique à la fin du vol.

Notamment, la réserve de sécurité peut alors être utilisée lors de la phase d'atterrissage exécutée à la fin du plan de vol.

Par ailleurs, le procédé selon l'invention peut comporter différents modes de fonctionnement de l'installation motrice hybride 10 utilisant différemment les moteurs thermiques 11,12 et les moteurs électriques 15,17, le mode de fonctionnement requis étant sélectionné au préalable par un pilote du giravion par exemple.

Dans ce but, le procédé peut comporter les étapes suivantes :
- sélection 100 d'un mode de fonctionnement pour sélectionner un mode de fonctionnement de l'installation motrice hybride 10 par l'intermédiaire d'un dispositif de sélection 35,
- commande 150 des deux moteurs thermiques 11,12 et des deux moteurs électriques 15,17 par l'intermédiaire respectivement des deux boîtiers de contrôle 13,14 et des deux dispositifs de commande 16,18 selon le mode de fonctionnement sélectionné parmi les modes de fonctionnement suivants en fonction de la sélection 100 :
   - le mode de fonctionnement réparti 160 appliquant ladite première répartition,
   - un mode de fonctionnement total 170 au cours duquel la puissance fournie par l'installation motrice hybride 10 est augmentée, chaque moteur thermique 11,12 fournissant la puissance maximale disponible et chaque moteur électrique 15,17 fournissant la puissance maximale disponible indépendamment du besoin en puissance mécanique du giravion 1 et dans les limites de la capacité du giravion 1, et
   - un mode de fonctionnement « basse émission » 180 appliquant une seconde répartition de puissance entre d'une part les deux moteurs thermiques 11,12 et d'autre part les deux moteurs électriques 15,17, la seconde répartition de puissance limitant les émissions polluantes de l'installation motrice hybride 10 pour l'environnement extérieur au giravion 1.

Le dispositif de sélection 35 peut être un sélecteur manuel à plusieurs positions, telle une molette rotative munie de plusieurs positions, ou bien être un écran et une dalle tactile par exemple.

Le mode de fonctionnement total permet de fournir la puissance maximale disponible pour la réalisation par exemple d'un décollage du giravion 1 avec une charge utile importante, d'une manœuvre exigeante, le transport d'une charge utile lourde, une augmentation de l'altitude maximale de vol...

Le mode de fonctionnement « basse émission » 180 permet une seconde répartition de puissance afin de limiter les nuisances pour l'environnement extérieur au giravion 1, ces nuisances pouvant être la pollution sonore ou bien due au gaz d'échappement des moteurs thermiques 11,12. Cette seconde répartition de puissance peut être prédéterminée. Par exemple, les deux moteurs électriques 15,17 fournissent la puissance et l'énergie maximales possibles en fonction de la quantité d'énergie électrique disponible dans la source 19 et les deux moteurs thermiques fournissent un complément de puissance en fonction du besoin en puissance mécanique du giravion. Ce mode de fonctionnement « basse émission » 180 est limité dans le temps par la quantité d'énergie électrique disponible dans la source 19.

La seconde répartition de puissance peut aussi être calculée en temps réel par le calculateur 9 en fonction d'une ou plusieurs premières caractéristiques, du besoin en puissance et éventuellement d'une ou plusieurs secondes caractéristiques. La seconde répartition de puissance tient compte aussi de l'état de la source 19 d'énergie électrique, de chaque moteur électrique 15,17 et de chaque moteur thermique 11,12, voire des conditions de vol du giravion 1.

Dans ce cas, le procédé selon l'invention peut comporter une étape de détermination 145 de cette seconde répartition de puissance entre d'une part chaque moteur thermique 11,12 et d'autre part chaque moteur électrique 15,17 en fonction d'au moins une première caractéristique et du besoin en puissance mécanique du giravion 1, et éventuellement d'au moins une seconde caractéristique.

Par ailleurs, le mode de fonctionnement total 170 et/ou le mode de fonctionnement « basse émission » 180 peut prendre en compte la préservation d'une réserve de sécurité d'énergie électrique pour la source 19 d'énergie électrique.

Enfin, indépendamment du mode de fonctionnement sélectionné, la première répartition de puissance ou la seconde répartition peut être déterminée de sorte qu'au moins un moteur électrique 15,17 fonctionne en mode générateur d'énergie électrique pour permettre de recharger au moins une source 19 d'énergie électrique quand cela est possible en fonction du besoin en puissance du giravion 1.

La puissance de recharge de la source d'énergie 19 peut être aussi déterminée en fonction du temps nécessaire à une recharge complète, dans la limite de sa capacité d'absorption de l'énergie, en fonction par exemple de la température de la source d'énergie 19, cette température pouvant augmentée lors de la recharge.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

Par exemple, un exemple de giravion comportant un rotor principal de sustentation et un rotor auxiliaire a été décrit. Cependant, l'invention peut être appliquée à d'autres types de giravions, comportant par exemple un rotor principal de sustentation et une ou plusieurs hélices d'avancement. L'invention peut aussi être appliquée à un giravion multirotor comportant plusieurs rotors principaux pour assurer la sustentation, la propulsion et la manœuvrabilité du giravion.

## Revendications

1. Procédé de gestion de l'énergie fournie par une installation motrice hybride (10) pour la propulsion d'un giravion (1), ledit giravion (1) comportant :
- une installation motrice hybride (10) munie d'au moins un moteur thermique (11,12), d'au moins un moteur électrique (15,17), d'une boîte de transmission principale de puissance (20), d'au moins une source (19) d'énergie électrique, d'un boîtier de contrôle (13,14) par moteur thermique (11,12), d'un dispositif de commande (16,18) par moteur électrique (15,17) et d'au moins un capteur (21,22) destiné à surveiller ladite au moins une source (19) d'énergie électrique ou ledit au moins un moteur électrique (15,17),
- au moins un rotor principal (2) entraîné en rotation par ladite installation motrice hybride (10) et
- au moins un calculateur (9),
ledit procédé comportant les étapes suivantes :
- acquisition (110) d'au moins une première caractéristique de ladite au moins une source (19) d'énergie électrique et/ou dudit au moins un moteur électrique (15,17) par l'intermédiaire dudit au moins un capteur (21,22),
- détermination (120) d'un besoin en puissance mécanique dudit giravion (1),
- détermination (140) d'une première répartition de puissance entre d'une part ledit au moins un moteur thermique (11,12) et d'autre part ledit au moins un moteur électrique (15,17) en fonction de ladite au moins une première caractéristique et dudit besoin en puissance mécanique dudit giravion (1), et
- commande (150) dudit au moins un moteur thermique (11,12) et dudit au moins un moteur électrique (15,17) par l'intermédiaire respectivement dudit au moins un boîtier de contrôle (13,14) et dudit au moins un dispositif de commande (16,18) selon un mode de fonctionnement réparti (160), ledit mode de fonctionnement réparti (160) appliquant ladite première répartition de puissance, ledit procédé comportant une étape de détermination (135) d'une phase de vol dudit giravion (1), ladite phase de vol étant prise en compte lors de ladite étape de détermination (140) de ladite première répartition de puissance,
**caractérisé en ce que** ledit procédé comporte les étapes suivantes :
- sélection (100) d'un mode de fonctionnement pour sélectionner un mode de fonctionnement de ladite installation motrice hybride (10) par l'intermédiaire d'un dispositif de sélection (35),
- commande (150) dudit au moins un moteur thermique (11,12) et dudit au moins un moteur électrique (15,17) par l'intermédiaire respectivement dudit au moins un boîtier de contrôle (13,14) et dudit au moins un dispositif de commande (16,18) selon ledit mode de fonctionnement sélectionné parmi les modes de fonctionnement suivants en fonction de ladite sélection (100) :
• ledit mode de fonctionnement réparti (160),
• un mode de fonctionnement total (170) au cours duquel la puissance fournie par ladite installation motrice hybride (10) est augmentée, ledit au moins un moteur thermique (11,12) fournissant la puissance et l'énergie maximale disponibles et ledit au moins un moteur électrique (15,17) fournissant la puissance maximale disponible indépendamment dudit besoin en puissance mécanique dudit giravion (1), et
• un mode de fonctionnement « basse émission » (180) appliquant une seconde répartition de puissance entre d'une part ledit au moins un moteur thermique (11,12) et d'autre part ledit au moins un moteur électrique (15,17), la seconde répartition de puissance limitant les émissions polluantes de ladite installation motrice hybride (10) pour l'environnement extérieur audit giravion (1).

2. Procédé selon la revendication 1,
**caractérisé en ce que** ledit procédé comporte une étape d'acquisition (130) d'au moins une seconde caractéristique dudit giravion (1) et/ou de l'installation motrice hybride (10), ladite au moins une seconde caractéristique étant utilisée lors de ladite étape de détermination (140) d'une première répartition de puissance.

3. Procédé selon la revendication 1,
**caractérisé en ce que** ledit procédé comporte une étape d'acquisition (130) d'au moins une seconde caractéristique dudit giravion (1) et/ou de l'installation motrice hybride (10), ladite au moins une seconde caractéristique étant utilisée lors de ladite étape de détermination (120) d'un besoin en puissance mécanique dudit giravion (1).

4. Procédé selon l'une quelconque des revendications 2 à 3,
**caractérisé en ce que** ladite au moins une seconde caractéristique dudit giravion (1) et/ou de l'installation motrice hybride (10) est choisie parmi la liste suivante :
- vitesse de rotation d'un moteur thermique (11,12),
- température d'un moteur thermique (11,12),
- état de santé d'un moteur thermique (11,12),
- vitesse de rotation du rotor principal (2),
- altitude dudit giravion (1),
- vitesse d'avancement dudit giravion (1),
- vitesse verticale dudit giravion (1),
- valeur d'une commande de pas collectif des pales dudit rotor principal (2), et
- valeur d'une commande de pas cyclique des pales dudit rotor principal (2).

5. Procédé selon l'une quelconque des revendications 1 à 4,
**caractérisé en ce que** ladite phase de vol est choisie dans une liste comprenant une phase de décollage, une phase d'atterrissage, une phase de vol stationnaire, une phase de vol en palier, une phase de changement d'altitude et une phase de manœuvre.

6. Procédé selon l'une quelconque des revendications 1 à 5,
**caractérisé en ce que** ladite étape de détermination (140) d'une première répartition de puissance prend en compte la préservation d'une réserve de sécurité d'énergie électrique pour au moins une source (19) d'énergie électrique.

7. Procédé selon l'une quelconque des revendications 1 à 6,
**caractérisé en ce que** ladite étape de détermination (140) d'une première répartition de puissance prend en compte un plan de vol dudit giravion (1) de sorte que ladite au moins une source (19) d'énergie électrique ne comporte plus d'énergie électrique à la fin du vol.

8. Procédé selon l'une quelconque des revendications 1 à 7,
**caractérisé en ce que** ladite au moins une première caractéristique de ladite au moins une source (19) d'énergie électrique et/ou dudit au moins un moteur électrique (15,17) est choisie parmi la liste suivante :
- un état de charge de ladite au moins une source (19) d'énergie électrique,
- un taux de décharge de ladite au moins une source d'énergie électrique,
- une température de ladite au moins une source (19) d'énergie électrique,
- un état de santé de ladite au moins une source (19) d'énergie électrique,
- une température dudit au moins un moteur électrique (15,17).

9. Procédé selon la revendication selon l'une quelconque des revendications 1 à 8,
**caractérisé en ce que** ladite première répartition de puissance est déterminée de sorte que ledit au moins un moteur électrique (15,17) fonctionne en mode générateur d'énergie électrique de sorte à recharger au moins une source (19) d'énergie électrique.

10. Procédé selon l'une quelconque des revendications 1 à 9,
**caractérisé en ce que** ledit mode de fonctionnement total (170) et/ou ledit mode de fonctionnement « basse émission » (180) prend en compte la préservation d'une réserve de sécurité d'énergie électrique pour au moins une source (19) d'énergie électrique dans ledit mode de fonctionnement « basse émission ».

11. Procédé selon l'une quelconque des revendications 1 à 10,
**caractérisé en ce que** selon ladite seconde répartition de puissance, ledit au moins un moteur électrique (15,17) fournit l'énergie maximale disponible et ledit au moins un moteur thermique (11,12) fournit un complément de puissance en fonction dudit besoin en puissance mécanique dudit giravion (1).

12. Procédé selon l'une quelconque des revendications 1 à 11,
**caractérisé en ce que** ledit procédé comporte une étape de détermination (145) d'une seconde répartition de puissance entre d'une part ledit au moins un moteur thermique (11,12) et d'autre part ledit au moins un moteur électrique (15,17) en fonction de ladite au moins une première caractéristique et dudit besoin en puissance mécanique dudit giravion (1).

13. Procédé selon la revendication 12,
**caractérisé en ce que** ladite étape de détermination (145) d'une seconde répartition de puissance prend en compte au moins une seconde caractéristique dudit giravion (1) et/ou de l'installation motrice hybride (10) et/ou une phase de vol dudit giravion (1) de sorte que ladite au moins une source (19) d'énergie électrique ne comporte plus d'énergie électrique à la fin du vol.

14. Installation motrice hybride (10) destinée à un giravion (1), ladite installation motrice hybride (10) comportant au moins un moteur thermique (11,12), au moins un moteur électrique (15,17), d'une boîte de transmission principale de puissance (20) au moins une source (19) d'énergie électrique, un boîtier de contrôle (13,14) par moteur thermique (11,12), un dispositif de commande (16,18) par moteur électrique (15,17) et au moins un capteur (21,22) destiné à surveiller ladite au moins une source (19) d'énergie électrique ou ledit au moins un moteur électrique (15,17),
**caractérisée en ce que** ladite installation motrice hybride (10) comporte un calculateur (9) configuré pour mettre en œuvre le procédé selon l'une quelconque des revendications 1 à 13.

15. Giravion (1) comportant une installation motrice hybride (10) et au moins un rotor principal (2) entraîné en rotation par ladite installation motrice hybride (10) et
**caractérisé en ce que** ladite installation motrice hybride est selon la revendication 14.

## Patentansprüche

1. Verfahren zur Steuerung der von einer Hybridantriebsanlage (10) für den Antrieb eines Drehflüglers (1) gelieferten Energie, wobei der Drehflügler (1) umfasst:
- eine Hybridantriebsanlage (10) mit mindestens einem Verbrennungsmotor (11, 12), mindestens einem Elektromotor (15, 17), einem Hauptleistungsgetriebe (20), mindestens einer elektrischen Energiequelle (19), einem Steuergerät (13, 14) pro Verbrennungsmotor (11, 12), einer Steuervorrichtung (16, 18) pro Elektromotor (15, 17) und mindestens einem Sensor (21, 22) zur Überwachung der mindestens einen elektrischen Energiequelle (19) oder des mindestens einen Elektromotors (15, 17),
- mindestens einem von der Hybridantriebsanlage (10) drehangetriebenen Hauptrotor (2) und
- mindestens einen Rechner (9),
wobei das Verfahren die folgenden Schritte umfasst:
- Erfassen (110) mindestens einer ersten Kenngröße der mindestens einen elektrischen Energiequelle (19) und/oder des mindestens einen Elektromotors (15, 17) mittels des mindestens einen Sensors (21, 22),
- Ermitteln (120) eines mechanischen Leistungsbedarfs des Drehflüglers (1),
- Bestimmen (140) einer ersten Leistungsverteilung zwischen dem mindestens einen Verbrennungsmotor (11, 12) einerseits und dem mindestens einen Elektromotor (15, 17) andererseits in Abhängigkeit von der mindestens einen ersten Kenngröße und dem mechanischen Leistungsbedarf des Drehflüglers (1), und
- Steuern (150) des mindestens einen Verbrennungsmotors (11, 12) und des mindestens einen Elektromotors (15, 17) über das mindestens eine Steuergerät (13, 14) bzw. die mindestens eine Steuervorrichtung (16, 18) gemäß einem verteilten Betriebsmodus (160), wobei der verteilte Betriebsmodus (160) die erste Leistungsverteilung anwendet,
wobei das Verfahren einen Schritt des Bestimmens (135) einer Flugphase des Drehflüglers (1) umfasst, wobei die Flugphase bei dem Schritt des Bestimmens (140) der ersten Leistungsverteilung berücksichtigt wird,
**dadurch gekennzeichnet, dass** das Verfahren die folgenden Schritte umfasst:
- Auswählen (100) eines Betriebsmodus zum Auswählen eines Betriebsmodus der Hybridantriebsanlage (10) über eine Auswahlvorrichtung (35),
- Steuern (150) des mindestens einen Verbrennungsmotors (11, 12) und des mindestens einen Elektromotors (15, 17) über das mindestens eine Steuergerät (13, 14) bzw. die mindestens eine Steuervorrichtung (16, 18) gemäß dem in Abhängigkeit von dem Auswählen (100) aus den folgenden Betriebsmodi ausgewählten Betriebsmodus:
• dem verteilten Betriebsmodus (160),
• einem Gesamtbetriebsmodus (170), in dem die von der Hybridantriebsanlage (10) gelieferte Leistung erhöht wird, wobei unabhängig vom mechanischen Leistungsbedarf des Drehflüglers (1) der mindestens eine Verbrennungsmotor (11, 12) die maximal verfügbare Leistung und Energie liefert und der mindestens eine Elektromotor (15, 17) die maximal verfügbare Leistung liefert, und
• einem "Niedrigemissions"-Betriebsmodus (180), der eine zweite Leistungsverteilung zwischen dem mindestens einen Verbrennungsmotor (11, 12) einerseits und dem mindestens einen Elektromotor (15, 17) andererseits anwendet, wobei die zweite Leistungsverteilung die Schadstoffemissionen der Hybridantriebsanlage (10) für die Umgebung außerhalb des Drehflüglers (1) begrenzt.

2. Verfahren nach Anspruch 1,
**dadurch gekennzeichnet, dass** das Verfahren einen Schritt des Erfassens (130) mindestens einer zweiten Kenngröße des Drehflüglers (1 ) und/oder der Hybridantriebsanlage (10) umfasst, wobei die mindestens eine zweite Kenngröße bei dem Schritt des Bestimmens (140) einer ersten Leistungsverteilung verwendet wird.

3. Verfahren nach Anspruch 1,
**dadurch gekennzeichnet, dass** das Verfahren einen Schritt des Erfassens (130) mindestens einer zweiten Kenngröße des Drehflüglers (1) und/oder der Hybridantriebsanlage (10) umfasst, wobei die mindestens eine zweite Kenngröße bei dem Schritt des Bestimmens (120) eines mechanischen Leistungsbedarfs des Drehflüglers (1) verwendet wird.

4. Verfahren nach einem der Ansprüche 2 bis 3,
**dadurch gekennzeichnet, dass** die mindestens eine zweite Kenngröße des Drehflüglers (1) und/oder der Hybridantriebsanlage (10) aus der folgenden Liste ausgewählt wird:
- Drehzahl eines Verbrennungsmotors (11, 12),
- Temperatur eines Verbrennungsmotors (11, 12),
- Gesundheitszustand eines Verbrennungsmotors (11, 12),
- Drehzahl des Hauptrotors (2),
- Flughöhe des Drehflüglers (1),
- Vorwärtsgeschwindigkeit des Drehflüglers (1),
- Vertikalgeschwindigkeit des Drehflüglers (1),
- Wert eines kollektiven Blattanstellwinkels des Hauptrotors (2) und
- Wert eines zyklischen Blattanstellwinkels des Hauptrotors (2).

5. Verfahren nach einem der Ansprüche 1 bis 4,
**dadurch gekennzeichnet, dass** die Flugphase aus einer Liste ausgewählt wird, die eine Startphase, eine Landephase, eine Schwebeflugphase, eine Horizontalflugphase, eine Höhenänderungsphase und eine Manöverphase umfasst.

6. Verfahren nach einem der Ansprüche 1 bis 5,
**dadurch gekennzeichnet, dass** der Schritt des Bestimmens (140) einer ersten Leistungsverteilung die Bewahrung einer Sicherheitsreserve an elektrischer Energie für mindestens eine Quelle (19) elektrischer Energie berücksichtigt.

7. Verfahren nach einem der Ansprüche 1 bis 6,
**dadurch gekennzeichnet, dass** der Schritt des Bestimmens (140) einer ersten Leistungsverteilung einen Flugplan des Drehflüglers (1) so berücksichtigt, dass die mindestens eine elektrische Energiequelle (19) am Ende des Fluges keine elektrische Energie mehr enthält.

8. Verfahren nach einem der Ansprüche 1 bis 7,
**dadurch gekennzeichnet, dass** die mindestens eine erste Kenngröße der mindestens einen elektrischen Energiequelle (19) und/oder des mindestens einen Elektromotors (15, 17) aus der folgenden Liste ausgewählt wird:
- ein Ladezustand der mindestens einen elektrischen Energiequelle (19),
- eine Entladerate der mindestens einen elektrischen Energiequelle,
- eine Temperatur der mindestens einen elektrischen Energiequelle (19),
- ein Gesundheitszustand der mindestens einen elektrischen Energiequelle (19),
- eine Temperatur des mindestens einen Elektromotors (15, 17).

9. Verfahren nach Anspruch 1 bis 8,
**dadurch gekennzeichnet, dass** die erste Leistungsverteilung so bestimmt wird, dass der mindestens eine Elektromotor (15, 17) im Generatorbetrieb arbeitet, um mindestens eine elektrische Energiequelle (19) aufzuladen.

10. Verfahren nach einem der Ansprüche 1 bis 9,
**dadurch gekennzeichnet, dass** der Gesamtbetriebsmodus (170) und/oder der Niedrigemissionsbetriebsmodus (180) die Aufrechterhaltung einer Sicherheitsreserve an elektrischer Energie für mindestens eine elektrische Energiequelle (19) im Niedrigemissionsbetriebsmodus berücksichtigt.

11. Verfahren nach einem der Ansprüche 1 bis 10,
**dadurch gekennzeichnet, dass** gemäß der zweiten Leistungsverteilung der mindestens eine Elektromotor (15, 17) die maximal verfügbare Energie liefert und der mindestens eine Verbrennungsmotor (11, 12) eine Leistungsergänzung in Abhängigkeit vom mechanischen Leistungsbedarf des Drehflüglers (1) liefert.

12. Verfahren nach einem der Ansprüche 1 bis 11,
**dadurch gekennzeichnet, dass** das Verfahren einen Schritt des Bestimmens (145) einer zweiten Leistungsverteilung zwischen dem mindestens einen Verbrennungsmotor (11, 12) einerseits und dem mindestens einen Elektromotor (15, 17) andererseits in Abhängigkeit von der mindestens einen ersten Kenngröße und dem mechanischen Leistungsbedarf des Drehflüglers (1) umfasst.

13. Verfahren nach Anspruch 12,
**dadurch gekennzeichnet, dass** der Schritt des Bestimmens (145) einer zweiten Leistungsverteilung mindestens eine zweite Kenngröße des Drehflüglers (1) und/oder der Hybridantriebsanlage (10) und/oder eine Flugphase des Drehflüglers (1) so berücksichtigt, dass die mindestens eine elektrische Energiequelle (19) am Ende des Fluges keine elektrische Energie mehr enthält.

14. Hybridantriebsanlage (10) für einen Drehflügler (1), wobei die Hybridantriebsanlage (10) mindestens einen Verbrennungsmotor (11, 12), mindestens einen Elektromotor (15, 17), mindestens eine elektrische Energiequelle (19), ein Steuergerät (13, 14) pro Verbrennungsmotor (11, 12), eine Steuervorrichtung (16, 18) pro Elektromotor (15, 17) und mindestens einen Sensor (21, 22) zur Überwachung der mindestens einen elektrischen Energiequelle (19) oder des mindestens einen Elektromotors (15, 17) umfasst,
**dadurch gekennzeichnet, dass** die Hybridantriebsanlage (10) einen Rechner (9) umfasst, der konfiguriert ist, um das Verfahren gemäß einem der Ansprüche 1 bis 13 auszuführen.

15. Drehflügler (1) mit einer Hybridantriebsanlage (10) und mindestens einem von der Hybridantriebsanlage (10) drehangetriebenen Hauptrotor (2), **dadurch gekennzeichnet, dass** die Hybridantriebsanlage gemäß Anspruch 14 ausgebildet ist.

## Claims

1. Method of managing the energy supplied by a hybrid power plant (10) for the propulsion of a rotoraircraft (1), said rotoraircraft (1) comprising:
- a hybrid power plant (10) equipped with at least one thermal engine (11,12), at least one electric motor (15,17), a main gearbox (20), at least one electrical energy source (19), one control unit (13,14) for each thermal engine (11,12), one control device (16,18) for each electric motor (15,17) and at least one sensor (21,22) designed to monitor said at least one electrical energy source (19) or said at least one electric motor (15,17),
- at least one main rotor (2) driven in rotation by said hybrid power plant (10) and
- at least one calculator (9),
said method comprising the following steps:
- acquiring (110) at least one first characteristic of said at least one electrical energy source (19) and/or said at least one electric motor (15,17) by means of said at least one sensor (21,22),
- determining (120) a mechanical power requirement of said rotoraircraft (1),
- determining (140) a first power distribution between, on the one hand, said at least one thermal engine (11,12) and, on the other hand, said at least one electric motor (15,17) as a function of said at least one first characteristic and said mechanical power requirement of said rotoraircraft (1), and
- controlling (150) said at least one thermal engine (11,12) and said at least one electric motor (15,17) by means of said at least one control unit (13,14) and said at least one control device (16,18), respectively, according to a distributed operating mode (160), said distributed operating mode (160) applying said first power distribution,
said method further comprising a step of determining (135) a flight phase of said rotoraircraft (1), said flight phase being taken into account during said step of determining (140) said first power distribution,
**characterized in that** said method comprises the following steps:
- selecting (100) an operating mode to select an operating mode of said hybrid power plant (10) by means of a selection device (35),
- controlling (150) said at least one thermal engine (11,12) and said at least one electric motor (15,17) by means of said at least one control unit (13,14) and said at least one control device (16,18), respectively, according to said selected operating mode from among the following operating modes based on said selection (100):
» said distributed operating mode (160),
. a full power operating mode (170) during which the power supplied by said hybrid power plant (10) is increased, said at least one thermal engine (11,12) providing the maximum available power and energy, and said at least one electric motor (15,17) providing the maximum available power independently of said mechanical power requirement of said rotoraircraft (1), and
• a "low emission" operating mode (180) applying a second power distribution between, on the one hand, said at least one thermal engine (11,12) and, on the other hand, said at least one electric motor (15,17), the second power distribution limiting the pollutant emissions of said hybrid power plant (10) into the external environment of said rotoraircraft (1).

2. Method according to Claim 1,
**characterized in that** said method comprises a step of acquiring (130) at least one second characteristic of said rotoraircraft (1) and/or of the hybrid power plant (10), said at least one second characteristic being used during said step of determining (140) a first power distribution.

3. Method according to Claim 1,
**characterized in that** said method comprises a step of acquiring (130) at least one second characteristic of said rotoraircraft (1) and/or of the hybrid power plant (10), said at least one second characteristic being used during said step of determining (120) a mechanical power requirement of said rotoraircraft (1).

4. Method according to any one of Claims 2 to 3,
**characterized in that** said at least one second characteristic of said rotoraircraft (1) and/or of the hybrid power plant (10) is/are chosen from the following list:
- rotational speed of a thermal engine (11,12),
- temperature of a thermal engine (11,12),
- health status of a thermal engine (11,12),
- rotational speed of the main rotor (2),
- altitude of said rotoraircraft (1),
- forward speed of said rotoraircraft (1),
- vertical speed of said rotoraircraft (1),
- value of a collective pitch control for the blades of said main rotor (2), and
- value of a cyclic pitch control for the blades of said main rotor (2).

5. Method according to any one of Claims 1 to 4,
**characterized in that** said flight phase is chosen from a list comprising a take-off phase, a landing phase, a hovering phase, a cruising phase, an altitude change phase and a manoeuvring phase.

6. Method according to any one of Claims 1 to 5,
**characterized in that** said step of determining (140) a first power distribution takes into account the preservation of an electrical energy safety reserve for at least one electrical energy source (19).

7. Method according to any one of Claims 1 to 6,
**characterized in that** said step of determining (140) a first power distribution takes into account a flight plan of said rotoraircraft (1) so that said at least one electrical energy source (19) has no remaining electrical energy at the end of the flight.

8. Method according to any one of Claims 1 to 7,
**characterized in that** said at least one first characteristic of said at least one electrical energy source (19) and/or of said at least one electric motor (15,17) is chosen from the following list:
- a state of charge of said at least one electrical energy source (19),
- a rate of discharge of said at least one electrical energy source,
- a temperature of said at least one electrical energy source (19),
- a health status of said at least one electrical energy source (19),
- a temperature of said at least one electric motor (15,17).

9. Method according to any one of Claims 1 to 8,
**characterized in that** said first power distribution is determined such that said at least one electric motor (15,17) operates in generator mode to recharge at least one electrical energy source (19).

10. Method according to any one of Claims 1 to 9,
**characterized in that** said full power operating mode (170) and/or said "low emission" operating mode (180) takes into account the preservation of an electrical energy safety reserve for at least one electrical energy source (19) in said "low emission" operating mode.

11. Method according to any one of Claims 1 to 10,
**characterized in that** according to said second power distribution, said at least one electric motor (15,17) provides the maximum available energy and said at least one thermal engine (11,12) provides supplementary power based on said mechanical power requirement of said rotoraircraft (1).

12. Method according to any one of Claims 1 to 11,
**characterized in that** said method comprises a step of determining (145) a second power distribution between, on the one hand, said at least one thermal engine (11,12) and, on the other hand, said at least one electric motor (15,17) based on said at least one first characteristic and said mechanical power requirement of said rotoraircraft (1).

13. Method according to Claim 12,
**characterized in that** said step of determining (145) a second power distribution takes into account at least one second characteristic of said rotoraircraft (1) and/or of the hybrid power plant (10) and/or a flight phase of said rotoraircraft (1), in such a manner that said at least one electrical energy source (19) has no remaining electrical energy at the end of the flight.

14. Hybrid power plant (10) for a rotoraircraft (1), said hybrid power plant (10) comprising at least one thermal engine (11,12), at least one electric motor (15,17), a main gearbox (20), at least one electrical energy source (19), a control unit (13,14) for each thermal engine (11,12), a control device (16,18) for each electric motor (15,17) and at least one sensor (21,22) designed to monitor said at least one electrical energy source (19) or said at least one electric motor (15,17),
**characterized in that** said hybrid power plant (10) comprises a calculator (9) configured to implement the method according to any one of Claims 1 to 13.

15. Rotoraircraft (1) comprising a hybrid power plant (10) and at least one main rotor (2) driven in rotation by said hybrid power plant (10) and
**characterized in that** said hybrid power plant (10) is according to Claim 14.
